Europäisches Patentamt

European Patent Office

Office européen des brevets

(11) Numéro de publication: **0 317 456**
**A1**

# (12) DEMANDE DE BREVET EUROPEEN

(21) Numéro de dépôt: **88420388.6**

(22) Date de dépôt: **18.11.88**

(51) Int. Cl.⁴: **A 01 M 21/04**
**B 05 B 1/30**

(30) Priorité: **20.11.87 FR 8716380**

(43) Date de publication de la demande:
**24.05.89 Bulletin 89/21**

(84) Etats contractants désignés: **DE ES FR GB**

(71) Demandeur: **BERTHOUD S.A., Société anonyme dite**
**48, rue Victor Hugo**
**F-69823 Belleville sur Saône (FR)**

(72) Inventeur: **Nissels, Robert**
**Vallières**
**FR-69830 Saint Georges de Reneins (FR)**

(74) Mandataire: **Karmin, Roger et al**
**Cabinet MONNIER 150, cours Lafayette**
**F-69003 Lyon (FR)**

(54) **Application de produit phytosanitaire par humectation.**

(57) Il comprend :
- un réservoir (10) de liquide de traitement comportant un canal de déversement (102b) ;
- un dispositif d'écoulement (17c) du liquide créant des pertes de charge élevées et disposé à la base du réservoir (10) ;
- des moyens d'obturation (18) situés à l'entrée du dispositif d'écoulement du liquide ;
- et une prise d'air (15) assurant que la pression atmosphérique est maintenue dans le réservoir (10) pendant l'écoulement.

Fig. 8

EP 0 317 456 A1

## Description

La présente invention se réfère de manière générale aux opérations de désherbage et elle se rapporte plus particulièrement à un applicateur destiné à déposer une à une des gouttelettes sur les feuilles des mauvaises herbes.

On sait que le désherbage peut s'effectuer mécaniquement ou chimiquement, cette dernière méthode étant pratiquement indispensable lorsqu'on a affaire à une végétation touffue.

Une opération de désherbage chimique peut être faite par saupoudrage au moyen d'une poudreuse destinée à répartir des granulés propres à se déliter. Ce procédé présente un inconvénient majeur résidant dans le fait que les granulés restent sur le sol pendant plusieurs jours à la portée des enfants qui peuvent les avaler avec toutes les conséquences que cela peut entraîner.

On peut aussi traiter les mauvaises herbes par arrosage à l'aide d'une rampe placée sur le bec de déversement d'un arrosoir. Une telle opération est longue, fastidieuse et pénible car il faut procéder très souvent au remplissage de l'arrosoir. De plus, le surdosage est fréquent et le travail de précision impossible. On peut aussi effectuer le traitement chimique à l'aide d'un pulvérisateur convenablement équipé soit d'une rampe, soit d'une buse.

Ce type de traitement est sans conteste le plus adapté au désherbage. Il possède toutefois un inconvénient important qui réside dans le fait qu'il est pratiquement impossible de discerner, et en tout cas de séparer, les zones à traiter de celles qui n'ont pas à l'être.

On peut également effectuer un désherbage ponctuel qui consiste à toucher une partie des mauvaises herbes avec un embout suintant du liquide phytosanitaire pratiquement pur ou à très faible dilution. L'avantage essentiel de ce procédé est d'être sans danger pour les plantes avoisinantes. De plus, il n'est pas nécessaire de transporter de grandes quantités de liquide, de sorte qu'un tel traitement n'est pas pénible. Ce traitement efficace est pourtant limité, car il est d'une part très lent et d'autre part on ne peut pas repérer les plantes traitées. Il n'existe en réalité à l'heure actuelle aucun applicateur de ce genre vraiment au point.

Les applicateurs considérés posent un problème important pour le traitement des grandes surfaces. A cet effet, on utilise une mèche de textile (feutre ou corde) humidifiée de désherbant par capillarité. On comprend aisément que la partie capillaire de la mèche est en contact avec le milieu environnant souvent poussiéreux, ce qui modifie ses caractéristiques, parfois jusqu'à l'obstruction. En outre, la vitesse d'avancement est très difficile à déterminer exactement en fonction de la densité de la végétation, si bien qu'on peut aboutir à un traitement insuffisant ou surabondant.

Ces deux défauts entraînent le même résultat, c'est-à-dire que, lors de l'emploi de désherbant systémique, les racines ne sont pas détruites. En effet, lorsque le traitement est insuffisant, la plante n'est pas détruite en totalité et s'il est surabondant, il entraîne une brûlure de la partie aérienne de la plante empêchant la descente du désherbant dans ses racines.

Lorsqu'on utilise un procédé d'application ponctuel, on se heurte aux mêmes inconvénients que pour le traitement des grandes surfaces, bien que le textile soit souvent remplacé par une éponge synthétique, c'est-à-dire une mousse à cellules ouvertes.

L'application dans ces conditions sur les parties aériennes de mauvaises herbes est très délicate, car les feuilles n'opposent pas une réaction suffisante à la mèche ou à l'éponge synthétique, ces deux moyens de transfert du désherbant nécessitant un appui contre la feuille à traiter. En réalité, les traitements ponctuels se font de manière générale sans appareillage avec un pinceau tenu dans l'une des mains de l'opérateur, tandis que l'autre maintient la feuille. Le récipient de désherbant est posé par terre avec les risques de renversement que cela comporte ; de plus, le pinceau goutte entre l'emplacement du récipient et la plante à traiter, de sorte que les gouttes pouvant s'échapper du pinceau endommagent les plantes qui ne sont pas à traiter.

Les perfectionnements qui font l'objet de la présente invention visent à remédier aux divers inconvénients indiqués ci-dessus et à permettre la réalisation d'un applicateur qui soit susceptible de déposer très précisément et avec une seule main le désherbant sans variation de fiabilité dans le temps, l'appareil étant simple, bon marché et s'adaptant à la vitesse de travail sans réglage délicat.

A cet effet, l'applicateur suivant l'invention comprend :
- un réservoir de liquide de traitement comportant un canal de déversement ;
- un dispositif d'écoulement du liquide créant des pertes de charge élevées et disposé à la base du réservoir en amont dudit canal ;
- des moyens d'obturation de l'écoulement du liquide ;
- et une prise d'air assurant que la pression atmosphérique est maintenue dans le réservoir pendant l'écoulement du liquide.

Le dessin annexé, donné à titre d'exemple, permettra de mieux comprendre l'invention, les caractéristiques qu'elle présente et les avantages qu'elle est susceptible de procurer :

Fig. 1 est une vue en élévation de l'applicateur suivant l'invention à sa position de stockage.

Fig. 2 en est une coupe longitudinale suivant II-II (fig. 1).

Fig. 3 est une vue semblable à celle de fig. 1, mais illustrant l'applicateur suivant l'invention à sa position d'utilisation.

Fig. 4 est une coupe suivant IV-IV (fig. 3).

Fig. 5 est une coupe transversale à plus grande échelle de la partie distributrice de liquide de l'applicateur suivant l'invention.

Fig. 6 est une coupe suivant VI-VI (fig. 5).

Fig. 7 est une vue en perspective du système d'obturation du dispositif d'écoulement à pertes de charge élevées.

Fig. 8 et 9 sont des coupes longitudinales d'un applicateur établi suivant une variante et représenté à ses positions de repos et d'utilisation.

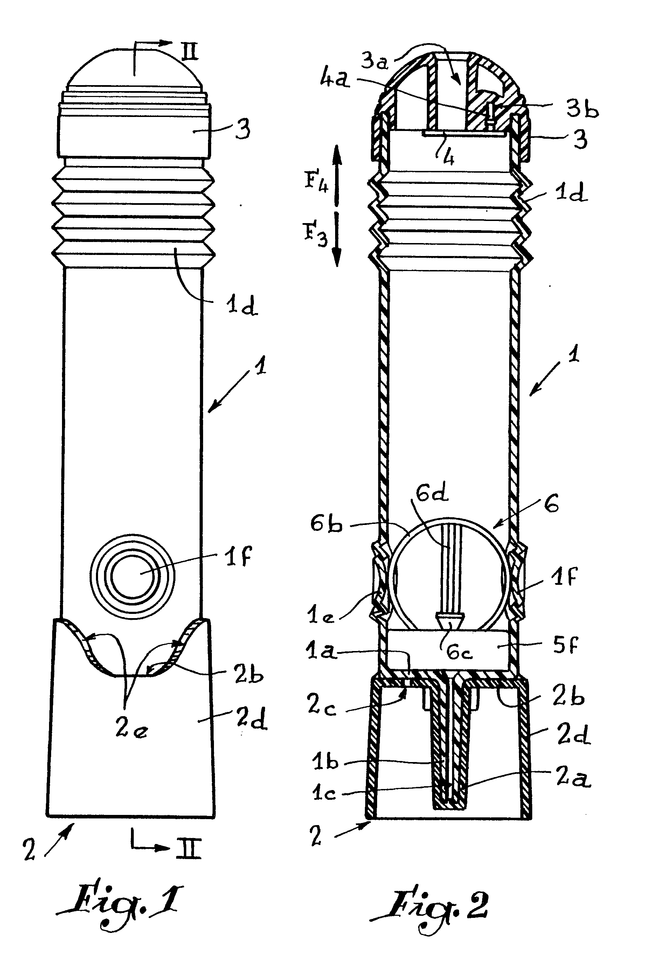

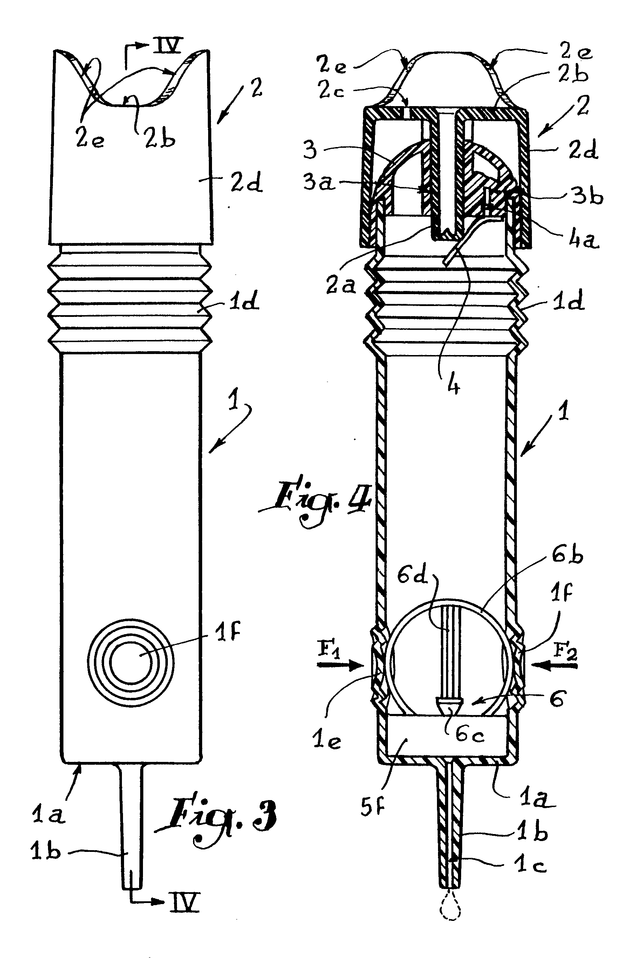

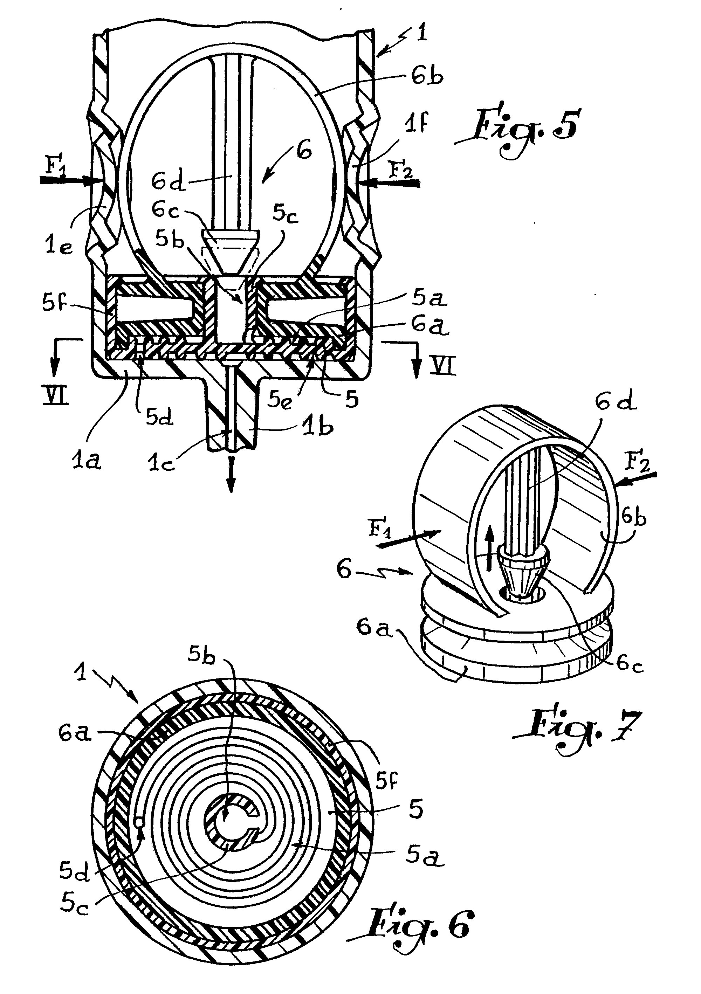

L'applicateur de désherbant suivant l'invention, illustré en fig. 1 à 4, comprend essentiellement un corps tubulaire constituant un réservoir 1 dont l'une des extrémités comprend un fond 1a à partir duquel part une canule 1b pourvue d'un canal de déversement 1c faisant communiquer l'intérieur du réservoir 1 avec l'extrémité de la canule 1b. L'autre extrémité du réservoir 1 est ouverte. A proximité de cette extrémité, la paroi constituant le réservoir est plissée pour former une zone compressible axialement, référencée 1d et conformée en accordéon.

Près du fond 1a du réservoir 1, sa paroi latérale comporte deux pastilles 1e, 1f reliées à ladite paroi par une zone de moindre résistance, de telle sorte que les deux pastilles en question peuvent être déplacées vers l'intérieur sous l'influence d'une poussée centripète.

Un capot 2 est destiné à protéger la canule 1b grâce à une cheminée 2a qui s'étend dans son centre et débouche sur le dessus de son fond 2b. Celui-ci comporte encore un orifice 2c pour des raisons qu'on expliquera mieux plus loin. La cheminée 2a présente en section transversale une forme polygonale. Comme illustré en fig. 1 et 2, lorsque le capot 2 est engagé autour de la canule 1b, on peut faire reposer l'applicateur suivant l'invention sur un plan horizontal par l'intermédiaire de l'arête libre de la jupe 2d du capot. Le fond 2b de ce dernier se prolonge par deux rampes arrondies en chapeau de gendarme 2e pour des raisons qu'on expliquera mieux plus loin.

Le réservoir 1 est fermé par un bouchon 3 présentant un alésage central 3a de section circulaire dans laquelle s'inscrit exactement la cheminée 2a. Le débouché de l'alésage 3a vers l'intérieur est fermé par un clapet 4 ancré dans le fond 3 au moyen d'une tige 4a s'encliquetant élastiquement dans une perforation de même forme 3b du fond 3. On observe que la partie du bouchon qui dépasse au-delà du réservoir 1 est de forme hémisphérique.

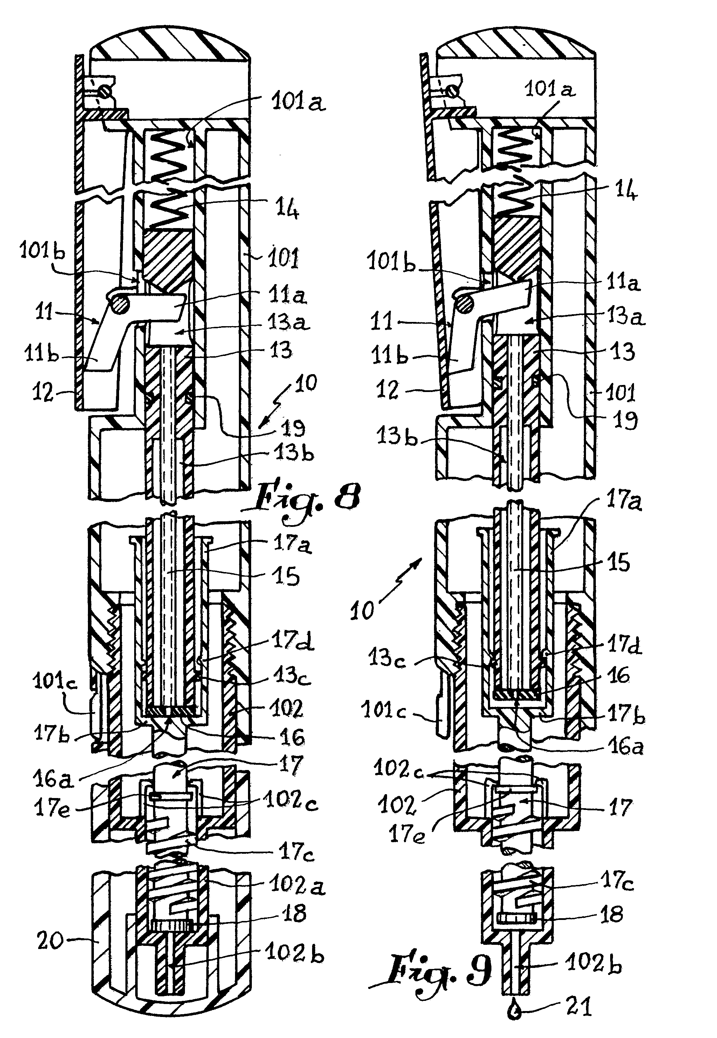

L'applicateur suivant l'invention comporte encore un dispositif d'écoulement du liquide créant des pertes de charge élevées et qui est réalisé au moyen d'un disque 5 (fig. 5) pourvu sur chacune de ses deux faces d'une gorge en spirale. La gorge 5a de la face supérieure, c'est-à-dire celle qui n'est pas en contact avec le fond 1a du réservoir 1, est issue du trou 5b d'un bossage central 5c s'élevant au-dessus du disque 5 à l'intérieur du réservoir 1. Le bout de la gorge en spirale 5a aboutit à une perforation 5d qui débouche à l'extrémité extérieure d'une seconde gorge en spirale 5e ménagée dans la face du disque 5 en contact avec le fond 1a du réservoir 1. Le centre de la gorge 5e correspond à l'origine du canal 1c de la canule 1b du réservoir 1, de telle sorte que du liquide arrivant dans le trou 5b passe dans le canal 1c après avoir subi des pertes de charge très importantes.

La périphérie du disque 5 est pourvue d'un bord circulaire 5f qui est appliqué contre la face intérieure du réservoir 1 en dessous des pastilles 1e, 1f. Dans l'espace compris entre le bossage 5c et le bord 5f on place la semelle 6a d'un obturateur 6 destiné à fermer le trou 5b comme on l'expliquera ci-dessous.

Ce dispositif d'obturation 6 comporte principalement un arceau 6b issu de l'embase 6a et prévu élastique. Le dispositif en question comporte encore un clapet 6c disposé à l'extrémité libre d'une tige 6d issue de la partie la plus haute de l'arceau 6b.

A l'état normal, le clapet 6c repose contre l'entrée du trou 5b du bossage 5c du disque 5, comme illustré en traits discontinus en fig. 5. A l'état libre, les deux parties latérales diamétralement opposées de l'arceau 6b reposent contre l'intérieur des pastilles 1e, 1f du réservoir 1.

Le fonctionnement découle des explications qui précèdent :

Quand l'appareil suivant l'invention est stocké, il se trouve dans la position illustrée en fig. 1 et 2 dans laquelle la canule polygonale 1b du réservoir 1 est engagée dans la cheminée 2a du capot 2. Celui-ci repose sur le sol et l'appareil se trouve dressé verticalement. L'alésage 3a du bouchon 3 est fermé par le clapet 4. Du liquide phytosanitaire peut être renfermé par le réservoir 1, mais il ne peut pas s'écouler étant donné que le clapet 6c repose contre son siège constitué par l'origine du trou 5b.

Si l'on désire traiter des végétaux, il faut tout d'abord extraire le capot 2 et venir l'engager autour du bouchon 3 dans une orientation identique à celle qu'il occupait lors du stockage. Dans ces conditions, la cheminée polygonale 2a pénètre dans l'alésage 3a du bouchon et vient ouvrir le clapet 4 (fig. 4). Par suite de la section polygonale de la cheminée, l'intérieur du réservoir 1 est en communication avec l'extérieur du fait de la présence de l'orifice 2c.

L'utilisateur peut saisir l'applicateur dans la main et appliquer deux de ses doigts contre les pastilles 1e, 1f pour excercer une force centripète sur celles-ci de manière à les enfoncer à l'intérieur du réservoir. Cet effort, réalisé dans le sens des flèches F1, F2 de fig. 4, provoque la déformation de l'arceau 6b qui s'ovalise comme illustré en fig. 5, de telle sorte que le clapet 6c se soulève de son siège. Pour amorcer l'écoulement, on peut, tout en maintenant le clapet ouvert, agir sur le bouchon 3 en vue de contracter le réservoir 1 par déformation de sa zone en accordéon 1d (flèche F3) de fig. 2. Après amorçage, la zone 1d reprend sa place en se déplaçant dans le sens de la flèche F4.

Par suite de la pression hydrostatique qui règne sur le liquide, il pénètre dans le trou 5b et s'écoule dans les gorges 5a et 5e pour arriver dans le canal 1c à l'extrémité duquel se forme une goutte. On peut alors appliquer sans pression l'extrémité de la canule contre la feuille d'une plante, quel que soit le niveau du liquide dans le corps.

Le réglage de la vitesse d'arrivée des gouttes les unes après les autres à l'extrémité du canal d'écoulement 1c s'effectue en changeant l'inclinaison du réservoir 1 qui provoque le changement de la hauteur de la colonne de liquide et crée un effet de siphon. En effet, lorsque le réservoir n'est pas vertical, le liquide doit franchir des parties des gorges en spirale qui sont montantes, de telle sorte qu'ainsi l'écoulement est plus lent.

On observe qu'en position d'utilisation, il est impossible de poser l'appareil autrement qu'avec l'une des génératrices de son réservoir 1 en contact avec un plan horizontal, car il n'est pas possible ni de le dresser sur la canule, ni sur les deux rampes 2e du capot 2.

Il va de soi que le dispositif d'écoulement du liquide créant des pertes de charge élevées peut être exécuté sous d'autres formes que celle du disque 5. On peut par exemple utiliser une membrane poreuse en nitrate de cellulose dont la porosité est de 5 micromillimètres pour une épaisseur de l'ordre de 0,2 mm, ou une membrane en polyéthylène fritté dont la porosité est de 50 micromillimètres pour une épaisseur de l'ordre de 3 mm, ou encore une membrane en céramique poreuse ou en alundum.

On préfère utiliser le disque 5 qui permet un long parcours en tube capillaire.

Le réservoir 1 est réalisé avantageusement en matière plastique transparente teintée pour protéger le produit de la lumière tout en permettant la lecture du niveau. Les pastilles 1e, 1f comme la zone plissée 1d sont obtenues directement lors de la fabrication par soufflage du réservoir. Quant au dispositif d'obturation 6, il est réalisé en une seule pièce par injection de résine polyacétal.

On a illustré en fig. 8 et 9 un autre mode d'exécution de l'invention. Selon cette variante le réservoir 10 est réalisé au moyen de deux tubes 101 et 102 assemblés par vissage par leurs extrémités ouvertes. Le fond du tube 101 est pourvu d'un alésage 101a tandis que le fond du tube 102 comporte un cylindre 102a à partir duquel part le canal de déversement 102b du liquide contenu dans le réservoir 10. Ce canal peut être prévu capillaire.

Dans la paroi de l'alésage 101a on a ménagé une encoche 101b que traverse l'une des branches 11a d'un levier basculant coudé 11 dont l'autre branche 11b coopère avec une patte 12 montée pivotante par rapport au tube 101.

Dans l'alésage 101a est engagé un plongeur 13 chargé par un ressort de compression 14 de manière que ledit plongeur soit repoussé vers le tube 102 du réservoir 10. Ce plongeur est percé d'un passage longitudinal 13a dans lequel est engagée la branche 11a du levier 11. A partir du passage 13a s'étend un tube capillaire 15 qui se termine au niveau de l'extrémité de la partie creuse 13b du plongeur 13. Cette extrémité est fermée par un joint souple 16 pourvu d'un trou central 16a qui correspond avec l'intérieur du tube capillaire 15 lequel prend appui contre ce joint autour de son trou. On observe que la périphérie du plongeur 13 près de son extrémité portant le joint 16 est munie d'un cordon circulaire 13c.

Le plongeur 13 s'engage dans une cuvette 17a d'un embout 17 qui pénètre à l'intérieur du cylindre 102a du tube 102. Le joint 16 repose contre le fond 17b de la cuvette 17a de telle sorte que l'embout 17 est plaqué par le ressort 14 contre le fond du cylindre 102a par l'intermédiaire d'un joint d'étanchéité 18 qui ferme l'origine du canal 102b. On observe que la partie de l'embout 17 située dans le cylindre 102a est pourvue d'une lèvre hélicoïdale 17c dont la périphérie coopère avec la paroi interne dudit cylindre. La face intérieure de la cuvette 17a comporte une nervure 17d située dans un plan transversal par rapport à ladite cuvette et qui est située au-delà du cordon 13c du plongeur 13 à partir du fond 17b de la cuvette 17a.

Enfin le tube 102 comporte des griffes 102c situées au-dessus d'une collerette 17e ménagée sur l'embout 17 de manière à retenir ce dernier dans le tube 102 quand celui-ci est démonté.

Le fonctionnement est le suivant :

Lorsque le tube 102 est dévissé de celui 101 on peut remplir ce dernier de liquide en le retournant avec son fond tourné vers le bas. Un joint 19 entourant le plongeur 13 évite toute fuite de liquide le long de ce dernier en direction de l'encoche 13a.

Le tube 102 est ensuite revissé sur celui 101 de telle sorte que l'appareil plein se présente alors sous la forme illustrée en fig. 8. L'appui du joint 16 contre le fond 17b évite toute entrée d'air dans le réservoir et de plus le canal 102b est fermé par le joint 18 de sorte que l'étanchéité est assurée et qu'il ne peut y avoir aucun écoulement de liquide par ce canal. Toutefois on a prévu un capuchon 20 s'engageant autour du réservoir 10 pour éviter toute fuite intempestive. Le capuchon peut par exemple être encliqueté au moyen d'un cliquet 101c solidaire du tube 101.

Lorsque l'on veut utiliser l'applicateur suivant la variante de fig. 8 et 9, l'utilisateur appuie sur la patte pivotante 12 pour faire basculer le levier 11 et entraîner le déplacement longitudinal du poussoir 13 à l'encontre de l'effet du ressort 14. Dans une première course du poussoir, le joint 16 se soulève de telle sorte que l'intérieur du réservoir est mis en communication avec l'atmosphère extérieure par l'intermédiaire du tube capillaire 15. Si l'on continue le déplacement de la patte 12 le cordon 13c du poussoir 13 vient buter contre la nervure 17d de l'embout 17 pour provoquer le soulèvement de celui-ci tant et si bien que le joint 18 se soulève et libère l'entrée du canal 102b. Le liquide contenu dans le réservoir peut donc s'écouler en traversant la spirale que constitue la lèvre hélicoïdale 17c. Celle-ci crée des pertes de charge élevées lors du passage du liquide contenu dans le réservoir. De plus le fait que la mise à l'air libre soit effectuée au moyen d'un tube capillaire 15 réduit considérablement la vitesse d'écoulement des gouttes 21 successives sortant du canal 102b.

**Revendications**

1. Applicateur de désherbant par humectation ponctuelle, caractérisé en ce qu'il comprend :

- un réservoir (1, 10) de liquide de traitement comportant un canal de déversement (1c, 102b) ;
- un dispositif d'écoulement (5, 17c) du liquide créant des pertes de charge élevées et disposé à la base du réservoir (1, 10) en amont dudit canal (1c, 102b) ;
- des moyens (6, 18) d'obturation de l'écoulement du liquide ;
- et une prise d'air (1b-2c, 15) assurant que la pression atmosphérique est maintenue dans le réservoir (1, 10) pendant l'écoulement du liquide.

2. Applicateur suivant la revendication 1, caractérisé en ce qu'il comporte une pompe d'amorçage (1d).

3. Applicateur suivant la revendication 1, caractérisé en ce que le dispositif d'écoulement (5) à pertes de charge élevées est constitué par un disque (5) pourvu sur chacune de ses deux faces d'une gorge en spirale (5a, 5e), les deux gorges étant réunies par une perforation (5d) traversant le disque à proximité de sa périphérie afin que le liquide arrivant dans le centre de la gorge (5a) située sur la face du disque tournée vers l'intérieur du réservoir afflue dans le centre de l'autre face en vis-à-vis du canal de déversement (1c) du réservoir (1).

4. Applicateur suivant la revendication 3, caractérisé en ce que les gorges en spirale (5a, 5e) sont capillaires.

5. Applicateur suivant la revendication 1, caractérisé en ce que les moyens d'obturation sont constitués d'une part par un siège situé à l'origine d'un trou (5b) ménagé dans un bossage central (5c) du dispositif d'écoulement (5) et d'autre part au moyen d'un clapet (6c) reposant de manière normale contre le siège et qui est associé au milieu d'un arceau (6b) souple adjacent à deux zones élastiques (1e, 1f) diamétralement opposées de la paroi du réservoir (1), de manière que l'enfoncement des deux zones (1e, 1f) en direction de l'intérieur provoque le soulèvement du clapet (6c).

6. Applicateur suivant la revendication 1, caractérisé en ce que l'extrémité du réservoir opposée à sa base comporte une zone (1d) conformée en accordéon afin de permettre une compression axiale dudit réservoir entraînant l'amorçage de l'écoulement lorsque le clapet (6c) est levé.

7. Applicateur suivant la revendication 1, caractérisé en ce que le canal de déversement (1c) du réservoir est capillaire.

8. Applicateur suivant la revendication 1, caractérisé en ce que le réservoir comporte un bouchon (3) percé d'un alésage central (3a) dont le débouché intérieur est fermé par un clapet plat (4).

9. Applicateur suivant la revendication 8, caractérisé en ce qu'il comprend en outre un capot protecteur (2) du canal de déversement du réservoir et qui, en cours de traitement, vient coiffer le bouchon (3), sa cheminée (2a) s'engageant dans l'alésage (3a) du bouchon (3) pour soulever le clapet (4) en ménageant des passages d'air longitudinaux grâce à sa forme polygonale.

10. Applicateur suivant la revendication 1, caractérisé en ce que le réservoir de liquide (10) renferme un mécanisme déplaçable longitudinalement et qui comprend :
- un plongeur (13) renfermant un tube capillaire (15) propre à mettre en communication l'intérieur du réservoir (10) et l'extérieur de celui-ci ;
- des moyens (11, 12) d'actionnement longitudinal dudit plongeur ;
- des moyens (16) d'obturation de l'extrémité libre du tube capillaire (15) à la position de repos de l'applicateur ;
- un embout (17) comportant d'une première part à l'une de ses extrémités les moyens (18) d'obturer le canal de déversement (102b) du réservoir (10), d'une seconde part le dispositif d'écoulement (17c) créant des pertes de charges élevées, et troisième part une liaison (17d) avec un élément (13c) du plongeur (13) assurant un degré de liberté de déplacement de celui-ci par rapport à l'embout (17).

11. Applicateur suivant la revendication 10, caractérisé en ce que le plongeur (13) coulisse de manière étanche dans un alésage du réservoir (10) dans lequel s'étend un levier (11) qui pénètre dans une encoche (13a) dudit plongeur (13) et dans laquelle débouche le tube capillaire (15).

12. Applicateur suivant la revendication 11, caractérisé en ce que l'extrémité libre du tube capillaire (15) est associée à un joint plat (16) percé.

13. Applicateur suivant la revendication 12, caractérisé en ce que la liaison du plongeur (13) et de l'embout (17) est réalisée sous la forme d'une cuvette (17a) solidaire de ce dernier et qui entoure l'extrémité dudit plongeur dont la face externe porte un cordon (13c) qui vient buter contre une nervure (17d) portée par la paroi interne de la cuvette (17a) après ouverture des moyens d'obturation (16) du tube capillaire (15).

14. Applicateur suivant la revendication 10, caractérisé en ce que l'embout (17) est pourvu d'un filetage (17c) dont la périphérie coopère avec un passage cylindrique (102d) du réservoir (10) pour former le dispositif à pertes de charges élevées et en ce que son extrémité porte un joint (18) qui vient obturer l'entrée du canal de déversement (102d).

*Fig. 1*

*Fig. 2*

*Fig. 3*

*Fig. 4*

Fig. 5

Fig. 7

Fig. 6

EP 0 317 456 A1

*Fig. 8*

*Fig. 9*

Office européen des brevets

**RAPPORT DE RECHERCHE EUROPEENNE**

Numéro de la demande

EP 88 42 0388

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-84486 (TECNOMA)<br>* abrégé; figures 1, 7 *<br>--- | 1, 10-11 | A01M21/04<br>B05B1/30 |
| Y | CA-A-1177801 (MACMILLAN BLOEDEL LTD)<br>* page 9, alinéa 1; figure 4 *<br>--- | 1, 10-11 | |
| A | BE-A-546087 (DONALDSON CO. INC.)<br>* page 3, ligne 22 - page 4, ligne 8; figure 1 *<br>--- | 1 | |
| A | CA-A-908107 (IMPERIAL OIL LTD)<br>* page 2, ligne 13 - page 3, ligne 11; figures 1-3 *<br>----- | 1 | |

**DOMAINES TECHNIQUES RECHERCHES (Int. Cl.4)**

A01M
B05B

Le présent rapport a été établi pour toutes les revendications

| Lieu de la recherche | Date d'achèvement de la recherche | Examinateur |
|---|---|---|
| LA HAYE | 07 FEVRIER 1989 | NEHRDICH H.J |